# EUROPEAN PATENT APPLICATION

(11) **EP 1 249 770 A2**
(43) Date of publication of application: **16.10.2002**
(21) Application number: 01122478.9
(22) Date of filing: 20.09.2001
(51) Int. Cl.: G06F 17/60

(54) **Advertisement information providing apparatus**

(30) Priority: 22.09.2000 JP 2000287947
(71) Applicant: Pioneer Corporation, Meguro-ku, Tokyo (JP)
(72) Inventor: Sakuma, Koji, c/o Pioneer Corp. Kawagoe Works, Kawagoe-shi, Saitama (JP); Odashima, Masahiro, Pioneer Corp. Kawagoe Works, Kawagoe-shi, Saitama (JP); Yamanaka, Tadamasa, Pioneer Corp. Kawagoe Works, Kawagoe-shi, Saitama (JP)
(74) Representative: Goddar, Heinz J., Dr.

(57) **Abstract**

An advertisement information providing apparatus which is capable of enhancing the effectiveness of an advertisement. The apparatus selectively provides a terminal apparatus mounted in a mobile vehicle with the advertisement information about a shop which is relatively close to the current position of the mobile vehicle and has a merchandised product belonging to the advertised merchandised product genre desired by the user of the terminal apparatus.

## Description

### BACKGROUND OF THE INVENTION

### 1. Technical Field of the Invention

The present invention relates to an advertisement information providing apparatus which provides advertisement information to a mobile vehicle.

### 2. Description of Related Art

In a moving vehicle, via radio broadcasting or the like, it is possible to receive advertisements broadcast which is sent to introduce various types of merchandised products, shops, and the like.

Although such advertisement broadcasting utilizing a radio broadcast allows to send an advertisement to a great number of listeners (receiving people) at the same time, since the advertised contents are the same for all of the listeners, it has not been always possible to gain interests of the majority of the listeners. In addition, when an advertised shop is located in a remote place from the current position of the vehicle, there is little likelihood that the listener will stop at this shop, and thus, the effectiveness of the advertisement has been restricted.

### OBJECT AND SUMMARY OF THE INVENTION

The present invention has been made to solve the above problem, and accordingly an object of the present invention is to provide an advertisement information providing apparatus which is able to enhance the effect of an advertisement.

An advertisement information providing apparatus according to the present invention is an apparatus which provides advertisement information for advertising a plurality of shops and the like to each one of the mobile vehicles, and comprises: a database in which pieces of advertisement information are stored correspondingly to the shops and merchandised product genre information, which indicates a type of products to be advertised, is stored correspondingly to each of the mobile vehicles; an area distinguishing part which distinguishes an area in which one of the mobile vehicles exists; a first searching part which searches out shops located in said area from the database; a merchandised product genre information reader part which reads out the product genre information which corresponds to the one of the mobile vehicles from the database; a second searching part which searches out, among the shops searched out by the first searching part, a shop which has a merchandised product which belongs to a product type presented by the product genre information; and an advertisement information sending part which reads out from the database the advertisement information corresponding to the shop searched out by the second searching part and transmits the advertisement information to the one of the mobile vehicles.

### BRIEF DESCRIPTION OF THE DRAWINGS

Fig. 1 is a diagram showing a telecommunications system including an advertisement information providing apparatus according to the present invention;
Fig. 2 is a diagram showing a system structure within a telecommunications center 12;
Fig. 3 is a diagram showing the structure of an advertisement information providing apparatus 13;
Fig. 4 is a diagram showing various types of information saved in a registered shop data region of a database 33;
Fig. 5 is a diagram showing various types of information saved in a user data region within the database 33;
Fig. 6 is a diagram showing the structure of an on-vehicle terminal apparatus 6;
Fig. 7 is a flowchart showing a telecommunications flow during registration of a merchandised product genre;
Fig. 8 is a flowchart showing a telecommunications flow as it is when advertisement information is provided;
Fig. 9 is a diagram showing a format for terminal status data TAD, advertisement information data MD, location information data PD and route guide data ND; and
Fig. 10 a flowchart showing a flow of telecommunications processes performed for indicating a route to an advertised shop.

### DETAILED DESCRIPTION OF THE EMBODIMENTS

In the following, preferred embodiments of the present invention will be described in detail with reference to the associated drawings.

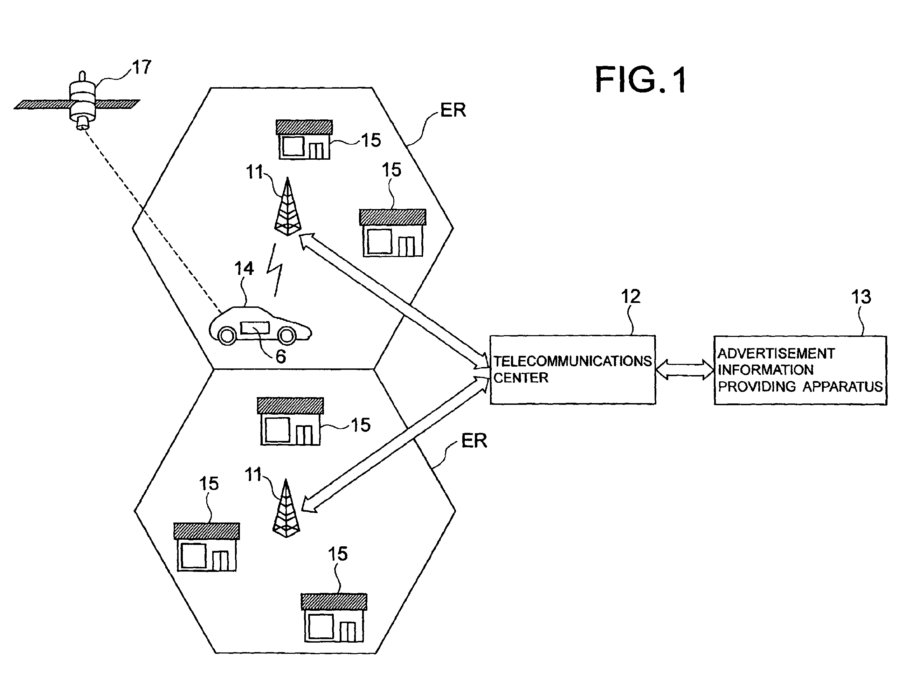

Fig. 1 shows a telecommunications system including an advertisement information providing apparatus according to the present invention. This telecommunications system comprises wireless base stations 11 which are installed in respective areas (telecommunications areas ER), a telecommunications center 12 which is operated by an operator of the cellular telephone service, an advertisement information providing apparatus 13, and vehicles 14 in which on-vehicle terminal apparatuses 6 are mounted.

Each of the wireless base station 11 relays wireless telecommunications from the on-vehicle terminal apparatuses 6 which are mounted on the vehicles 14 being present within an allocated telecommunications area ER. Regardless of the user's will, each wireless base station 11 regularly establishes communications with each of the on-vehicle terminal apparatuses 6 which are present within its telecommunications area ER. In this process, each wireless base station 11 acquires a telephone number of the on-vehicle terminal apparatus 6 and sends the telephone number to the telecommunications center 12.

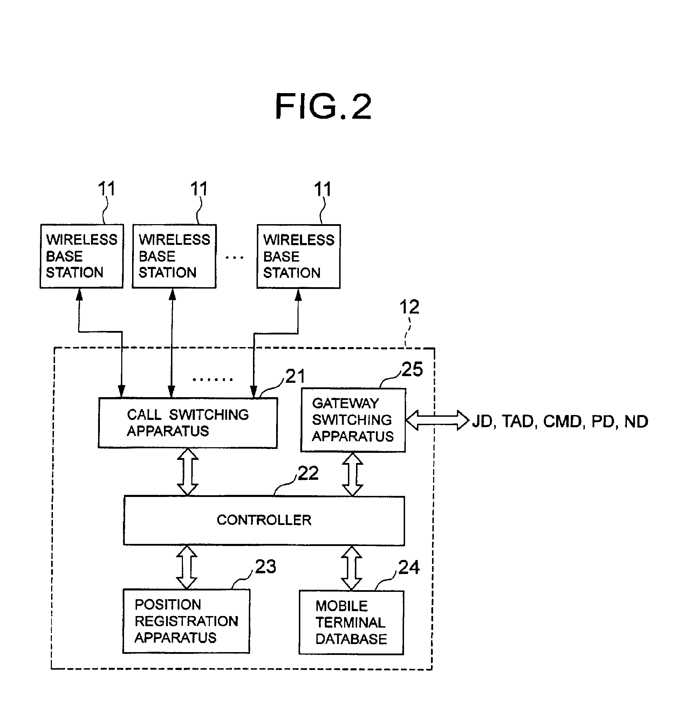

Fig. 2 shows a system structure in the telecommunications center 12 described above.

In Fig. 2, in an effort to establish wireless telecommunications between the on-vehicle terminal apparatuses 6, a call switching apparatus 21 connects transmission lines to each of the wireless base stations 11. Further, the call switching apparatus 21 captures the telephone numbers of the on-vehicle terminal apparatuses 6 which are regularly transmitted from the respective wireless base stations 11 and base station numbers of the respective wireless base stations 11 and supplies the information to a controller 22. The controller 22 correlates the telephone numbers and the base station numbers to each other and stores them in a position registration apparatus 23, and controls the call switching apparatus 21 described above in order to establish telecommunications between the respective mobile vehicles based on this information. A mobile terminal database 24 stores the telephone numbers of the on-vehicle terminal apparatuses 6 which are mounted on the respective vehicles 14. A gateway switching apparatus 25 is for managing data communications with the advertisement information providing apparatus 13, and therefore, sends various types of information data received from the controller 22 to the advertisement information providing apparatus 13, and receives various types of information data transmitted from the advertisement information providing apparatus 13 and supplies the received information to the controller 22.

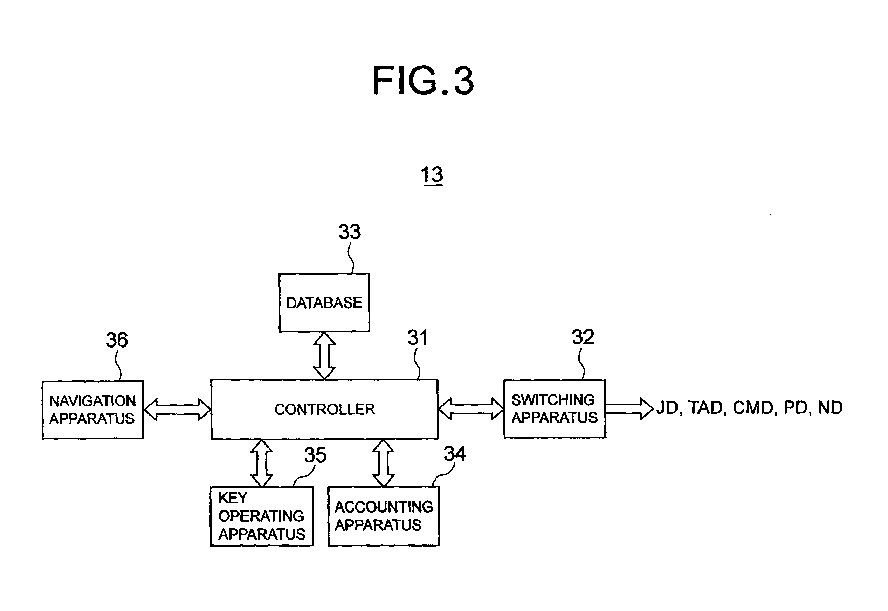

Fig. 3 shows the internal structure of the advertisement information providing apparatus 13.

In Fig. 3, a switching apparatus 32 is for managing data communications with the telecommunications center 12, and therefore, receives various types of information data transmitted from the telecommunications center 12 and supplies the received information to a controller 31, and sends various types of information data supplied from the controller 31 to the telecommunications center 12.

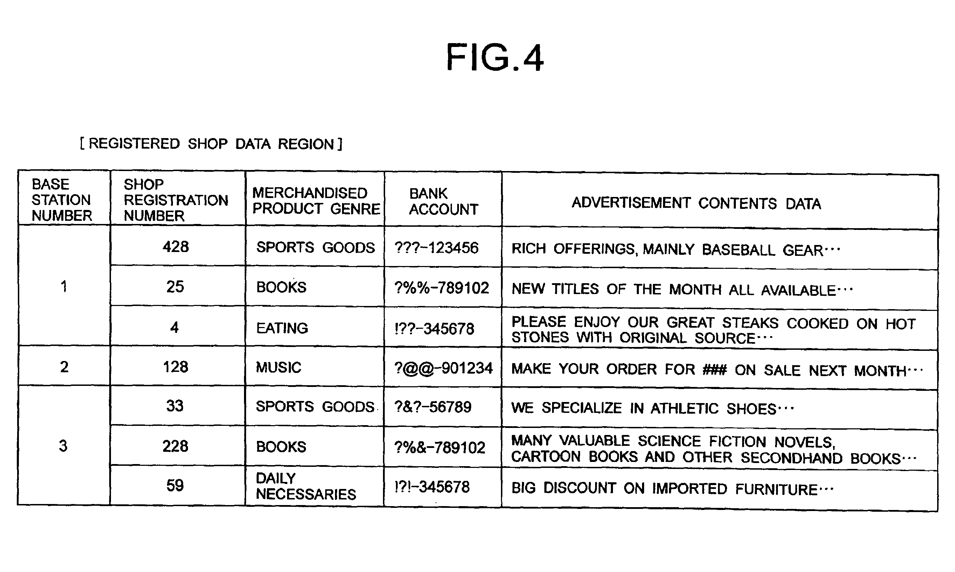

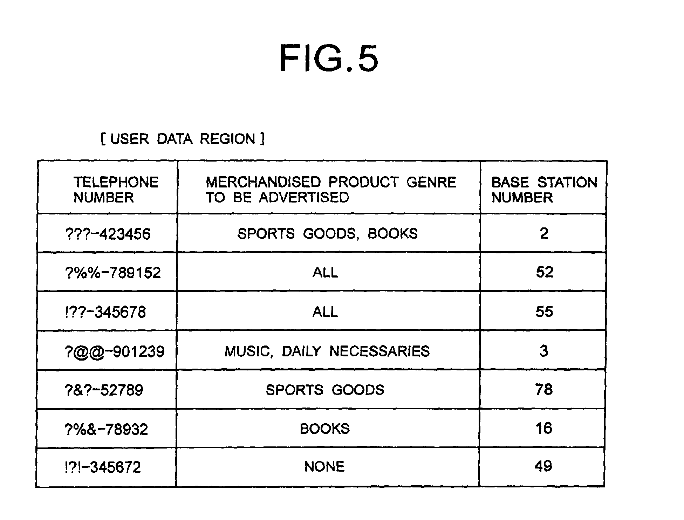

In a database 33, a registered shop data region as shown in Fig. 4 and a user data region as shown in Fig. 5 exist. Stored in the registered shop data region are, as shown in Fig. 4, shop registration numbers which indicate registered shops 15 in each of the telecommunications areas ER of which the wireless base stations 11 are respectively in charge, merchandised product genres of the registered shops 15, advertisement contents data (voices or images) for advertising the registered shops 15, and information which indicates bank accounts in correspondent banks of the registered shops 15. These pieces of information, as shown in Fig. 4, are registered as they are associated with base station numbers which represent the respective wireless base stations 11. The registered shops 15 are shops which are registered for surrogate advertisement services which utilize this advertisement information providing system. As shown in Fig. 5, stored in the user data region are the telephone numbers of each on-vehicle terminal apparatus 6, information indicating a merchandised product genre for which a user of this on-vehicle terminal apparatus 6 wishes to receive an advertisement, and the base station number of the wireless base station 11 which is responsible for communications with this on-vehicle terminal apparatus 6. An accounting apparatus 34 executes an accounting processing to charge predetermined surrogate advertisement fees to the correspondent bank accounts of the above-described registered shops 15, in response to an instruction from the controller 31. In addition, in response to an instruction from the controller 31, the accounting apparatus 34 executes an accounting processing to charge surrogate registration fees to a common bank account (which is an account for all registered shops 15 to commonly share the burden of the surrogate advertisement fees). A navigation system 36, receiving the shop registration number which indicates a certain registered shop 15 and current position information which indicates the current position of the vehicle 14, retrieves an optimal route from the current position to the position of this registered shop 15 and provides the controller 31 with route guide data for guiding along the optimal route using voices and images.

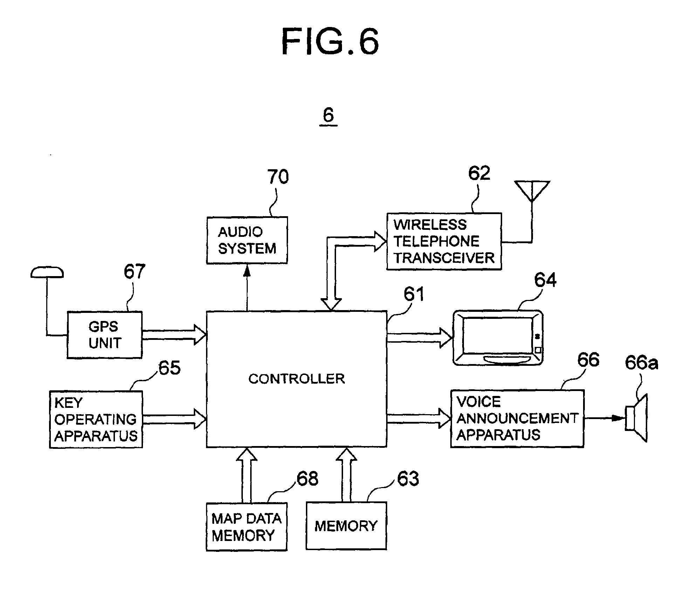

Fig. 6 shows an internal structure of the on-vehicle terminal apparatus 6 which is mounted on each vehicle 14.

In Fig. 6, a wireless telephone transceiver 62 receives the various types of information data transmitted from the advertisement information providing apparatus 13 via the telecommunications center 12 and the wireless base stations 11, and supplies the information data to a controller 61. Further, the wireless telephone transceiver 62 receives various types of information data provided from the controller 61 and supplies the information data to the advertisement information providing apparatus 13 via the telecommunications center 12 and the wireless base stations 11. A memory 63 temporarily stores various types of information data. A key operating apparatus 65 accepts various types of key operations made by a user and provides the controller 61 with various types of instruction signals which correspond to the respective key operations. A voice announcement apparatus 66 acoustically outputs through speaker 66a voices which are based on voice data corresponding to various types of voice announcements provided from the controller 61.

A GPS (Global Positioning System) unit 67 calculates the current position of each vehicle based on an electric wave from a GPS satellite 17 as that shown in Fig. 1, and supplies the current position information which is indicative of thus calculated current position to the controller 61. A map data memory 68 is formed by an information reproducing device which reproduces desired map data from storage media, such as CD-ROMs and DVDs (Digital Versatile Disk), which store map data for each area. The map data memory 68 reads map data designated by the controller 61 from the storage medium described above and supplies the data to the controller 61. At this stage, the controller 61 controls in accordance with the vehicle position displaying routine (not shown), so that a display apparatus 64 displays on its display screen a map to which a vehicle position mark is added. In other words, first, the controller 61 reads map data in which the position indicated by the above current position information is included from the map data for the respective areas stored in the map data memory 68. The controller 61 thereafter creates display map data in which the mark representing the above vehicle position is put on the map which is indicated by this map data, and supplies this to the display apparatus 64. The display apparatus 64 displays on its screen the map to which the vehicle position mark is added, based on this display map data. An audio system 70 comprises a tuner, a CD (or MD) player, a compact cassette player, an audio amplifier which selects one of these audio sources and amplifies an associated audio signal, and a speaker. The audio amplifier of the audio system 70 greatly lowers the output level of a voice which is being reproduced, in accordance with a mute signal supplied from the controller 61.

Now, operations for broadcasting advertisements using such an advertisement information providing system above will be described.

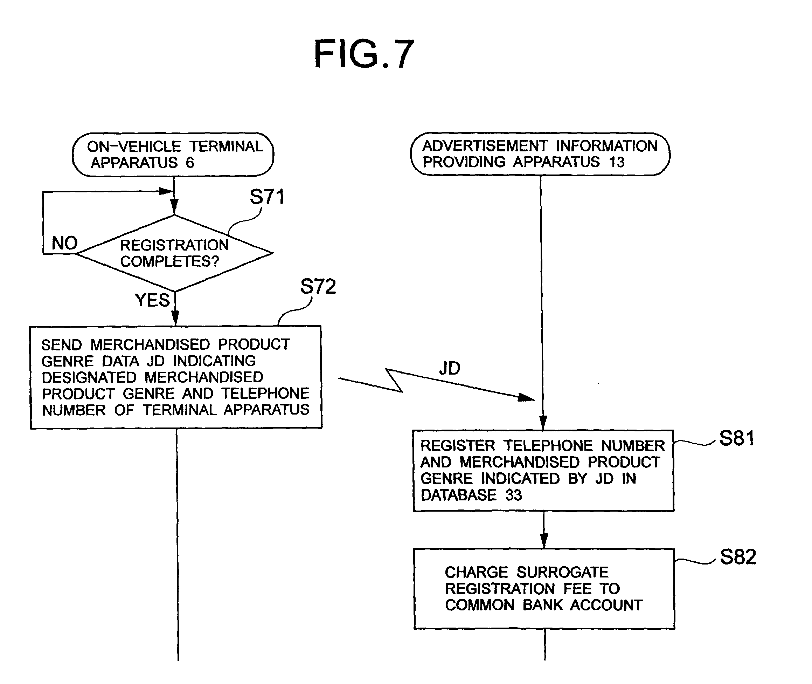

To watch and listen to advertisements broadcast, users of the described above on-vehicle terminal apparatuses 6 register merchandised product genres which the users wish advertisements for. For registration of the product genres, first, the users provide key operations to start registration of the product genres, using the key operating apparatuses 65 which are installed in the on-vehicle terminal apparatuses 6. By such key operations an operation for registering the product genres is initiated in accordance with a telecommunications flow as shown in Fig. 7.

In Fig. 7, first, the controller 61 of each on-vehicle terminal apparatus 6 repeatedly judges whether a key operation representing "REGISTRATION COMPLETED" has been made by operating apparatus 65 until a user enters the "REGISTRATION COMPLETED" key operation (Step S71). During this step for operating the keys on the key operating apparatus 65, the user designates a genre of merchandised products, such as "SPORTS," "MUSIC," "BOOKS" and "EATING," for which the user wishes advertisements. When designating a genre, if the user wants all product genres, the user operates the keys to designate "ALL," whereas if the user does not want any advertisement to be aired at all, the user operates the keys to designate "NONE." After designating the genre, the user provides the key operation representing "REGISTRATION COMPLETED" on the key operating apparatus 65. In response to the "REGISTRATION COMPLETED" key operation, the controller 61 creates merchandised product genre data JD which indicate the telephone number of the on-vehicle terminal apparatus 6 and the product genre designated in the above manner, and supplies the genre data JD to the wireless telephone transceiver 62 (Step S72). Upon execution of Step S72, the wireless telephone transceiver 62 transmits the above described genre data JD to the advertisement information providing apparatus 13 via the wireless base stations 11 and the telecommunications center 12.

Receiving the genre data JD, the controller 31 correlates the telephone number indicated by the genre data JD with the product genre for which advertisements are desired, and stores them in the user data region as shown in Fig. 5 (Step S81). Next, the controller 31 provides the accounting apparatus 34 with an instruction to charge the surrogate registration fee to the common bank account as described previously (Step S82),

After registration of the merchandised product genre for which advertisements are desired has been completed in the manner as described above, the user of the on-vehicle terminal apparatus 6 can acquire from the on-vehicle terminal apparatus 6 only those advertisements regarding the product genre which the user wants.

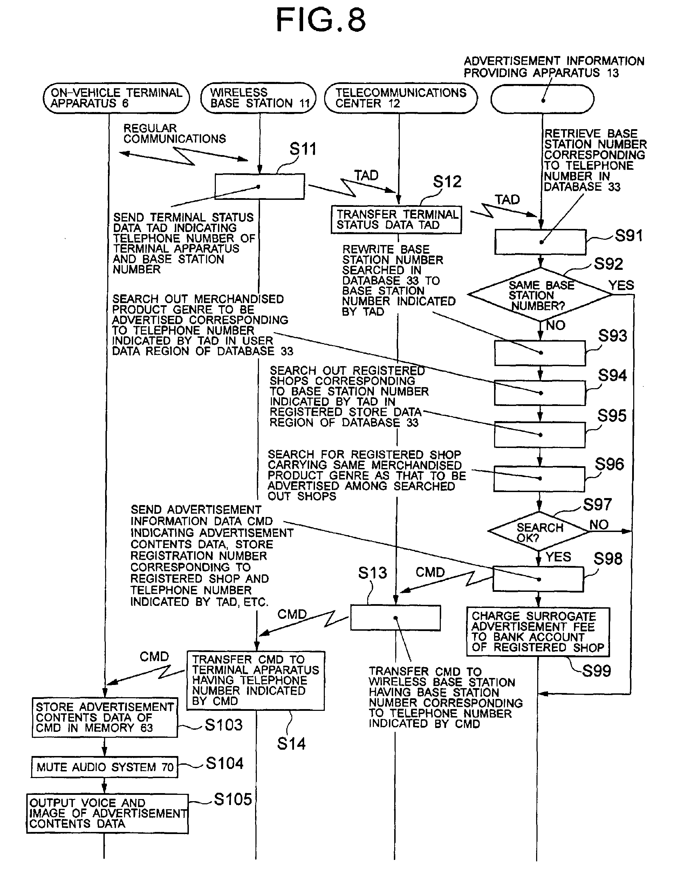

Fig. 8 shows a telecommunications flow until advertisements are put on the air as described above.

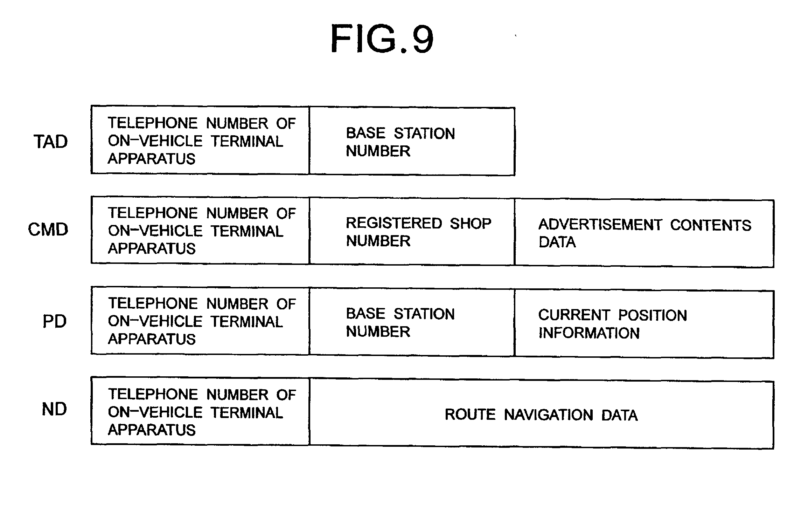

Communications are conducted regularly, irrespective of intentions of users, between the wireless base stations 11 and the on-vehicle terminal apparatuses 6 which are mounted on the respective vehicles 14 which are present inside the telecommunications areas ER. During regular communications, the wireless base stations 11 transmit to the telecommunications center 12 terminal status data TAD which is in a format as that shown in the top portion of Fig. 9 and indicative of the telephone number of the on-vehicle terminal apparatus 6 acquired through the communications and the base station number of the wireless base station 11 (Step S11).

The controller 22 of the telecommunications center 12 transfers the received terminal status data TAD to the advertisement information providing apparatus 13 (Step S12).

The controller 31 of the advertisement information providing apparatus 13 retrieves, in the user data region within the database 33 as that shown in Fig. 5, the base station number which corresponds to the telephone number indicated by the received terminal status data TAD (Step S91). Upon execution of Step S91, the wireless base station 11, which is currently used by the on-vehicle terminal apparatus 6 mounted to each vehicle 14 for relaying of communications, can be specified. Based on this, the advertisement information providing apparatus 13 distinguishes in which telecommunications area ER this vehicle 14 is present. Following this, the controller 31 judges whether the searched out base station number (which is the base station number of the wireless base station 11 in the telecommunications area ER in which the vehicle 14 was located on the preceding opportunity time) is the same as that which is indicated by the terminal status data TAD (Step S92). When it is judged at Step S92 that both are different, that is, where the vehicle 14 has already moved from one telecommunications area ER to another telecommunications area ER, the controller 31 rewrites the base station number retrieved in the user data region within the database 33 as described above into the base station number which is indicated by the terminal status data TAD (Step S93). Next, the controller 31 searches out a merchandised product genre on which advertisements are wished and which corresponds to the telephone number which is indicated by the above described terminal status data TAD, in the user data region within the database 33 as that shown in Fig. 5, and the controller 31 stores this in a built-in register (not shown) (Step S94). The controller 31 thereafter searches out the registered shops 15 which correspond to the base station number indicated by the terminal status data TAD in the registered shop data region within the database 33 as that shown in Fig. 4 (Step S95). Next, the controller 31 searches for a registered shop 15 which carries merchandised products which fall within the same merchandised product genre with the merchandised product genre mentioned above stored in the built-in register (Step S96). The controller 31 then judges whether the registered shop 15 which carries the product falling within the same product genre with the product genre mentioned above stored in the built-in register has been found at Step S96 or not (Step S97). When it is judged at Step S97 that a requested registered shop has been found, the controller 31 reads out, from the registered shop data region within the database 33 as that shown in Fig. 4, the advertisement contents data and the shop registration number which correspond to this registered shop. The controller 31 further creates advertisement information data CMD which are in a format as that shown in the second top portion of Fig. 9 and indicative of the advertisement contents data, the shop registration number and the telephone number indicated by the terminal status data TAD, and supplies this to the switching apparatus 32 (Step S98). Upon execution of Step S98, the switching apparatus 32 transmits the advertisement information data CMD to the telecommunications center 12.

Receiving the advertisement information data CMD, the controller 22 of the telecommunications center 12 retrieves the base station number which corresponds to the telephone number indicated by the advertisement information data CMD in the position registration apparatus 23, and transfers the advertisement information data CMD to the wireless base station 11 which is indicated by the searched base station number (Step S13).

Receiving the advertisement information data CMD, the wireless base station 11 establishes communications with the on-vehicle terminal apparatus 6 which is mounted to the vehicle 14 by means of the telephone number which is indicated by the advertisement information data CMD, and transfers the advertisement information data CMD to this on-vehicle terminal apparatus 6 (Step S14).

Incidentally, the controller 31 of the advertisement information providing apparatus 13 reads from the database 33 mentioned above the information regarding the correspondent bank account of the thus retrieved shop 15 found at Step S96, and provides the accounting apparatus 34 with an instruction to charge the surrogate advertisement fee to the bank account (Step S99). When it is judged at Step S92 that the previous base station number is the same as the current one, the controller 31 does not carry out Steps S93 through Step S99 described above. Further, when the result of Step S97 is that the registered shop 15 which carry merchandised product which fall within the same product genre with that stored in the built-in register has not been identified, the controller 31 does not carry out Steps S98 and Step S99 described above.

Receiving the advertisement information data CMD transmitted from the wireless base station 11, first, the controller 61 of the on-vehicle terminal apparatus 6 stores the advertisement contents data of the advertisement information data CMD in the memory 63 (Step S103). Next, the controller 61 supplies the mute signal to the audio system 70 (Step S104). The audio amplifier mounted to the audio system 70, responding to the mute signal, greatly lowers the output level of a voice which is being reproduced. Next, the controller 61 reads out the advertisement contents data stored in the above memory 63 and supplies it to the display apparatus 64 and the voice announcement apparatus 66 (Step S105). Upon execution of Step S105, the display apparatus 64 displays advertisement which is indicated by the above described advertisement contents data and the voice announcement apparatus 66 provides an announcement of the advertisement which is indicated by the advertisement contents data. In short, the display apparatus 64 and the voice announcement apparatus 66 of the on-vehicle terminal apparatus 6 mounted to the vehicle 14 put the advertisement broadcast inside the vehicle 14. The contents of the advertisement relate to the registered shop which has the merchandised products falling within the product genre which user of the on-vehicle terminal apparatus 6 has registered in advance. Further, the advertisement broadcast as described above is in regard to the registered shop 15 which is present within the telecommunications area ER in which the vehicle 14 is currently located.

Thus, the aired advertisements are only those advertisements presented from the shops which are relatively close to the current position of the vehicle and carry the merchandised products in which the users are interested, and therefore, the possibility that the users will stop at these shops.

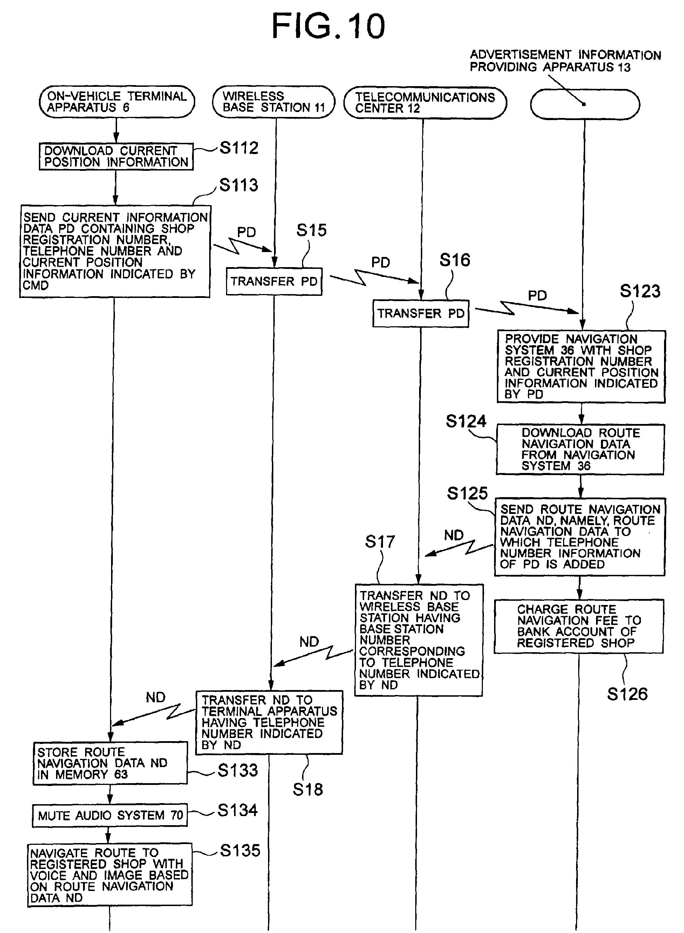

If a user in the vehicle 14, operating the key operating apparatus 65 of the on-vehicle terminal apparatus 6, requests for route guide to the registered shops 15 which are covered in the advertisements, an operation in accordance with a telecommunications flow as that shown in Fig. 10 is executed.

In Fig. 10, first, the controller 61 of the on-vehicle terminal apparatus 6 which is mounted to the vehicle 14 retrieves the current position information supplied from the GPS unit 67 (Step S112). Next, the controller 61 creates position information data PD which are in a format as that shown in the third top portion of Fig. 9 and indicative of the current position information, the shop registration number and the telephone number indicated by the advertisement information data CMD, and supplies this to the wireless telephone transceiver 62 (Step S113). Upon execution of Step S113, the position information data PD are transmitted to the advertisement information providing apparatus 13 via the wireless base stations 11 and the telecommunications center 12.

Receiving the position information data PD, the controller 31 of the advertisement information providing apparatus 13 provides the navigation system 36 with the shop registration number and the current position information indicated by the position information data PD (Step S123). In response, the navigation system 36 creates route guide data for guiding to a route using voices and images to the registered shops 15 which is indicated by the shop registration number from the current position, and supplies this to the controller 31. The controller 31 downloads the route navigation data (Step S124), creates route navigation data ND which are in a format as that shown in the bottom portion of Fig. 9 and which are the downloads route navigation data as they additionally include the telephone number contained in the position information data PD above, and supplies this to the switching apparatus 32 (Step S125). Upon execution of Step S125, the switching apparatus 32 transmits the route navigation data ND to the telecommunications center 12.

Receiving the route navigation data ND, the controller 22 of the telecommunications center 12 retrieves the base station number which corresponds to this telephone number which is indicated by the route navigation data ND in the position registration apparatus 23, and transfers the route navigation data ND to the wireless base station 11 which is indicated by the retrieved base station number (Step S17).

Receiving the route navigation data ND, the wireless base station 11 establishes communications with the on-vehicle terminal apparatus 6 which is mounted to the vehicle 14 by means of the telephone number which is added to the route navigation data ND, and transfers the route navigation data ND to the on-vehicle terminal apparatus 6 (Step S18).

The controller 61 of the on-vehicle terminal apparatus 6, receiving the route navigation data ND above transmitted from the wireless base station 11, first, stores this route navigation data in the memory 63 (Step S133). Next, the controller 61 supplies the mute signal to the audio system 70 (Step S134). The audio amplifier mounted in the audio system 70, responding to the mute signal, greatly lowers the output level of a voice which is being reproduced. Next, the controller 61 reads out the route navigation data stored in the memory 63 described above and supplies it to the display apparatus 64 and the voice announcement apparatus 66 (Step S135). Upon execution of Step S135, the display apparatus 64 displays a map which shows a route from the current position of the vehicle 14 to the registered shop 15 advertised in the manner described above. The voice announcement apparatus 66 makes voice announcement to indicate a route to the registered shop 15 above, via the speaker 66a.

Incidentally, the controller 31 of the advertisement information providing apparatus 13 provides the accounting apparatus 34 with an instruction to charge a route navigation fee to the correspondent bank account of this registered shop 15 which corresponds to the shop registration number which is indicated by the position information data PD above (Step S126).

Thus, by means of the operation shown in Fig. 10, direction (guidance) of a route to the advertised shop 15 is provided, and hence, the users of the on-vehicle terminal apparatus 6 can easily drop in on this shop.

As described above, according to the present invention, the terminal apparatuses which are mounted to the mobile vehicles are provided with only those advertisements regarding shops which are relatively close to the current positions of the mobile vehicles and carry merchandised products which can make users interested.

Hence, a possibility that the users will drop by at the advertised shop is improved according to the present invention, which realizes broadcasting of advertisements with a high effectiveness of advertisement.

The features disclosed in the foregoing description, in the claims and/or in the accompanying drawings may, both separately and in any combination thereof, be material for realising the invention in diverse forms thereof.

## Claims

1. An advertisement information providing apparatus which provides advertisement information for advertising a plurality of shops to each one of mobile vehicles, comprising;
a database in which pieces of said advertisement information are stored correspondingly to said shops respectively and merchandised product genre information, which indicates types of merchandised products for which an advertisement is desired, is stored correspondingly to each of said mobile vehicles;
an area distinguishing part which distinguishes an area in which one of said mobile vehicle is present,
a first searching part which searches out said shops which are located in said area from said database,
a merchandised product genre information reading part which reads out said merchandised product genre information corresponding to said one of said mobile vehicles from said database,
a second searching part which searches out a shop having a merchandised product of a type indicated by said merchandised product genre information among said shops retrieved by said first searching part, and
an advertisement information sending part which reads out said advertisement information corresponding to said shop retrieved by said second searching part using said database and said advertisement information to said one of said mobile vehicles.

2. The advertisement information providing apparatus of Claim 1, further comprising an accounting part which charges said shop retrieved by said second searching part for a surrogate advertisement fee.

3. The advertisement providing apparatus of Claim 1, wherein a mobile terminal apparatus which receives said advertisement information and outputs voices and images based on said advertisement information is mounted on each of said mobile vehicles.

4. The advertisement information providing apparatus of Claim 3, wherein said mobile terminal apparatus comprises: an input part which designates a merchandised product type for which an advertisement is wished; and merchandised product genre information sending part which transmits said merchandised product type designated by said input part as said merchandised product genre information.

5. An advertisement information providing apparatus according to Claim 1 or claim 4, wherein said merchandised product genre information transmitted by said mobile terminal apparatuses is received and registered in said database.

6. An advertisement information providing apparatus according to Claim 3, wherein said mobile terminal apparatus comprises a current position detecting part which detects current positions of said mobile vehicles and a current position information sending part for sending the current position information which indicates said current positions.

7. An advertisement information providing apparatus according to Claim 1 or claim 6, comprising:
a route navigation information generating part which receives said current position information transmitted from said mobile terminal apparatuses and creates route navigation information to indicate a route from a current position indicated by said current position information to said shop retrieved by said second searching part, and
a route navigation information sending part which sends said route navigation information to said mobile terminal apparatus.

8. The advertisement information providing apparatus of Claim 1, wherein said advertisement information providing apparatus comprises a plurality of wireless base stations each of which is provided in a telecommunications area which is previously allocated thereto,
each of said wireless base stations correlates a base station number denoting said each of said wireless base stations with information which indicates said mobile terminal apparatus mounted in each of said mobile vehicles which are present within said telecommunications areas and regularly transmit correlated data to said advertisement information providing apparatus,
said area distinguishing part determines that said telecommunications area corresponding to said base station number supplied by said wireless base stations is said area in which said one of said mobile vehicles is located.

9. A method for providing advertisement information for advertising a plurality of shops to each one of the mobile vehicles, comprising:
a product genre registration step for registering merchandised product genre information, which indicates a merchandised product genre for which advertisements desired, in correlation with the respective one of said mobile vehicles,
an area distinguishing step for distinguishing an area in which one of said mobile vehicles are present,
a shop-to-be-advertised retrieving step for searching out, among said shops located within said areas, a shop which has a product belonging to a product genre which is indicated by said product genre information corresponding to said one of said mobile vehicles, and
an advertisement outputting step for outputting a voice and an image based on said advertisement information corresponding to said shop which is searched out at said shop-to-be advertised retrieving step.

10. The method for providing advertisement information of Claim 9, further comprising a route navigation information generating step for generating route navigation information to navigate routes from current positions of said mobile vehicles to said shop which is retrieved at said shop-to-be-advertised retrieval step,
wherein at said advertisement outputting step, a voice and an image based on said route navigation information as well are outputted together with said advertisement information.
